(19) Europäisches Patentamt
European Patent Office
Office européen des brevets

(11) **EP 1 039 705 B1**

(12) **EUROPÄISCHE PATENTSCHRIFT**

(45) Veröffentlichungstag und Bekanntmachung des Hinweises auf die Patenterteilung:
**05.03.2008 Patentblatt 2008/10**

(51) Int Cl.:
**H04L 27/22** *(2006.01)*     **H04L 25/06** *(2006.01)*

(21) Anmeldenummer: **00104254.8**

(22) Anmeldetag: **01.03.2000**

(54) **Verfahren, Empfangseinrichtung und Funkstation zum Detektieren eines Datensymbols**

Method, receiver and radio station for detecting data symbols

Méthode, récepteur et station radio pour détecter des symboles de données

(84) Benannte Vertragsstaaten:
**FR IT NL**

(30) Priorität: **22.03.1999 DE 19912825**

(43) Veröffentlichungstag der Anmeldung:
**27.09.2000 Patentblatt 2000/39**

(73) Patentinhaber: **Nokia Siemens Networks GmbH & Co. KG**
**81541 München (DE)**

(72) Erfinder: **Schreib, Franz**
**81475 München (DE)**

(56) Entgegenhaltungen:
**WO-A-98/07247**

• **FAGERVIK K ET AL: "Low complexity bit by bit soft output demodulator" ELECTRONICS LETTERS, IEE STEVENAGE, GB, Bd. 32, Nr. 11, 23. Mai 1996 (1996-05-23), Seiten 985-987, XP006005177 ISSN: 0013-5194**

EP 1 039 705 B1

**Beschreibung**

Die Erfindung betrifft ein Verfahren, eine Empfangseinrichtung sowie eine Funkstation zum Detektieren eines über eine Funkschnittstelle eines Funk-Kommunikationssystems übertragenen Datensymbols, das eine Anzahl von durch eine multiple PSK-Modulation kodierten Informationselementen aufweist.

In Funk-Kommunikationssystemen werden Nutzdaten, wie beispielsweise Sprache, Bildinformation oder andere Daten, mit Hilfe von elektromagnetischen Wellen über eine Funkschnittstelle zwischen einer sendenden und einer empfangenden Funkstation übertragen. Das Abstrahlen der elektromagnetischen Wellen erfolgt dabei mit Trägerfrequenzen, die in dem für das jeweilige System vorgesehenen Frequenzband liegen. Beim bekannten GSM-Mobilfunksystem (Global System for Mobile Communication), wie es unter anderem aus J. Biala "Mobilfunk und intelligente Netze", Vieweg Verlag, 1995, bekannt ist, liegen die Trägerfrequenzen im Bereich von 900 MHz, 1800 MHz und 1900 MHz.

Für die Informationsübertragung über die Funkschnittstelle werden zu sendende Informationselemente in einer Modulationseinrichtung zu einem Basisbandsignal moduliert. Die Modulation bewirkt eine effizientere Frequenznutzung, eine größere Resistenz gegenüber Störungen während der Übertragung über die Funkschnittstelle sowie eine eine Reduzierung von Nachbarkanalstörungen. Verschiedene in Funk-Kommunikationssystemen eingesetzte Modulationsverfahren sind unter anderem aus Peter Hatzold "Digitale Funknetze", Funkschau 14/97, Arbeitsblätter, Digitale Modulation, Teil 4, bekannt. In dem GSM-Mobilfunksystem wird als Modulationsverfahren die Gauß'sche Minimalphasenlagen-Modulation (GMSK- Gaussian Minimum Shift Keying) eingesetzt. Das mittels der GMSK-Modulation erzeugte niederfrequente Basisbandsignal wird nachfolgend durch einen Mischer in die entsprechende Trägerfrequenz für die Übertragung transformiert.

Für eine Weiterentwicklung des bekannten GSM-Mobilfunksystems hinsichtlich einer erhöhten Datenrate, die als EDGE (Enhanced Data Rate for GSM Evolution) bezeichnet ist, wird in dem Dokument "EDGE - Evolution of 8-PSK", Ericsson, ETSI SMG2, WPB#4, Tdoc SMG2 WPD 108/98, Kuusamo, Finland, 20-24 April 1998, der Einsatz eines 8-PSK-Modulationsschemas (Phasenumtastung - Phase Shift Keying) anstelle der GMSK-Modulation vorgeschlagen. Dieses Modulationsverfahren ermöglicht eine Übertragung von drei Informationselementen (bit) pro übertragenem Datensymbol im Vergleich zu einem Informationselement pro übertragenem Datensymbol, wodurch die effektive Übertragungskapazität eines Verkehrskanals ca. um den Faktor drei erhöht werden kann. Eine multiple Phasenumtastung steigert somit die Bandbreiteneffizienz, die Wahrscheinlichkeit einer nicht korrekten Detektion der Datensymbole steigt jedoch mit der Anzahl der durch die Phasenumtastung möglichen Einzelsignale und den hierdurch auftretenden geringeren euklidische Distanzen zwischen einzelnen Konstellationspunkten auf dem Einheitskreis in der durch die In-Phase- und Quadraturkomponente aufgespannten komplexen Ebene. Dieses bedeutet weiterhin, daß im Vergleich zu der GMSK-Modulation zum Erreichen einer bestimmten Bitfehlerrate ein größeres Signal-Rausch-Verhältnis am Empfängereingang anliegen muß. Die Übertragung wird entsprechend empfindlicher gegenüber Störungen wie beispielsweise Interferenz oder kurzzeitige Abschattungen.

In dem GSM-Mobilfunksystem mit GMSK-Modulation erfolgt eine Dekodierung des empfangenen Datensymbols mittels eines Viterbi-Detektors. Nach einer Übertragung ins Basisband und einer Analog/Digitalwandlung wird das empfangene Datensymbol einem Detektor zugeführt, der beispielsweise als Viterbi-Detektor ausgebildet ist und eine Entzerrung und Datendetektion vornimmt. In dem Detektor wird eine euklidische Distanz zwischen dem empfangenen Datensymbol und den Konstellationspunkten für die binären Zustände des Informationselements bestimmt und hieraus eine sogenannte Zuverlässigkeitsinformation (Soft-Decision-Value) berechnet, die das Datensymbol mit einer durch die Zuverlässigkeitsinformation bezeichneten Wahrscheinlichkeit einem bestimmten Zustand des Informationselements zuordnet. Dieses Verfahren ermöglicht gegenüber einer "harten" Entscheidung (Hard-Decision) den Einsatz wesentlich effizienterer Dekodierverfahren. Bei einer multiplen Phasenumsetzung wird bei einer Anwendung dieses Verfahrens beispielsweise jeweils eine euklidische Distanz zu den Konstellationspunkten mit den geringsten euklidischen Distanzen ermittelt und hieraus eine Zuverlässigkeitsinformation abgeleitet. Dieses Verfahren generiert jedoch nachteilig für alle in dem Datensymbol enthaltenen Informationselemente eine gemeinsame Zuverlässigkeitsinformation. Der Viterbi-Algorithmus und die Erzeugung von "Hard Decisions" und "Soft Decisions" bei der Demodulation sind unter anderem aus den Kapiteln 11.1 bzw. 1.3 des Dokumentes "Error Control Coding" von S. Lin, D.J.Costello, Prentice Hall, 1983, bekannt.

Aus "Low complexity bit by bit soft output demodulator", von Fagervik et al., Electronics Letters, IEE Stevenage, GB, Bd.32, Nr.11, 23.Mai 1996, Seiten 985 - 987, XP006005177, ISSN 0013-5194 ist ein Verfahren bekannt, bei dem zur Demodulation euklidische Distanzen verwendet werden.

Der Erfindung liegt die Aufgabe zugrunde, ein Verfahren, eine Empfangseinrichtung sowie eine Funkstation anzugeben, die ein verbessertes Detektieren von Datensymbolen ermöglichen. Diese Aufgabe wird gemäß der Erfindung durch die jeweiligen Merkmale der unabhängigen Patentansprüche 1, 7 und 10 gelöst. Vorteilhafte Ausgestaltungen der Erfindung sind den jeweiligen Unteransprüchen zu entnehmen.

Erfindungsgemäß wird ein in eine In-Phasen- und eine Quadratur-Komponente umgesetztes empfangenes Datensymbol einem Konstellationspunkt mit einer geringsten euklidischen Distanz zugeordnet. Der Konstellationspunkt entspricht dabei einer bestimmten In-Phase- und Quadratur-Komponente mit einer Konstellation von Zuständen der Informationselemente des Datensymbols. Zusätzlich wird eine der Anzahl der Informationselemente entsprechende Anzahl euklidischer Distanzen zu jeweils eine Änderung des Zustands der Informationselemente des zugeordneten Konstellationspunktes bewirkenden weiteren Konstellationspunkten ermittelt. Mittels einer Berechnung einer Differenz zwischen der euklidischen Distanz zu dem jeweils weiteren Konstellationspunkt und der geringsten euklidischen Distanz wird für jedes Informationselement eine Zuverlässigkeitsinformation ermittelt.

Durch das erfindungsgemäße Verfahren wird für jedes in dem empfangenen Datensymbol enthaltene Informationselement eine Zuverlässigkeitsinformation im Vergleich zu nur einem Zuverlässigkeitswert für das Datensymbol gemäß dem in der Einleitung beschriebenen Stand der Technik ermittelt. Somit erhält man beispielsweise für drei Informationselemente eines 8PSK-Datensymbols drei individuelle Zuverlässigkeitsinformationen. Hierdurch wird vorteilhaft die Bitfehlerrate nach der Dekodierung durch fehlerhaft detektierte Informationselemente bei einem bestimmten Signal-Rausch-Verhältnis verringert und eine insbesondere bei der Übertragung von Datendiensten bedeutsame Erhöhung der Übertragungsqualität erreicht.

Gemäß einer ersten Weiterbildung der Erfindung werden die ermittelten Zuverlässigkeitsinformationen für eine Dekodierung des Datensymbols berücksichtigt.

Gemäß einer weiteren Weiterbildung der Erfindung wird die jeweils ermittelte Zuverlässigkeitsinformation mit einem von dem Zustand des jeweiligen Informationselements des zugeordneten Konstellationspunktes abhängigen Vorzeichen versehen.

Diese Ausgestaltung ermöglicht eine Ermittlung einer Metrik für eine Folge von Datensymbolen. Die mit dem entsprechenden Vorzeichen versehenen Zuverlässigkeitsinformationen werden mit den jeweiligen Zuständen der zugeordneten Konstellationspunkte verglichen und die Metrik abhängig von der Differenz gemäß einer kumulativen Metrik inkrementiert. Je größer die akkumulierte Metrik ist, desto größer ist die Übereinstimmung der detektierten Informationselemente mit den gesendeten Informationselementen. Unterschreitet die Metrik dahingegen beispielsweise einen bestimmten Schwellwert, so kann ein empfangsseitiges Verwerfen des Datenbursts in Betracht gezogen werden, wodurch der Datenburst keiner weiteren Verarbeitung zugeführt wird.

Gemäß einer auf der vorhergehenden Weiterbildung basierenden Ausgestaltung des erfindungsgemäßen Verfahrens wird das Vorzeichen entsprechend einer Signum-Funktion des Zustands des jeweiligen Informationselements berechnet.

Durch diese Ausgestaltung kann allgemein aus dem binären Zustand des Informationselements das Vorzeichen der Zuverlässigkeitsinformation berechnet werden, wobei ein binärer Zustand 0 ein negatives Vorzeichen und ein binärer Zustand 1 ein positives Vorzeichen der Zuverlässigkeitsinformation erzeugt.

Gemäß einer weiteren Weiterbildung der Erfindung werden die weiteren Konstellationspunkte mittels einer Tabelle bestimmt. In der Tabelle sind dabei zu jedem zugeordneten Konstellationspunkt die jeweiligen weiteren Konstellationspunkte spezifiziert.

Diese Tabelle ermöglicht eine weitere Erhöhung der Qualität des Detektionsverfahrens, da in der Tabelle für jeden zugeordneten Konstellationspunkt die jeweiligen weiteren Konstellationspunkte mit der geringsten euklidischen Distanz zu dem empfangenen Datensymbol hinterlegt werden. Hierdurch wird beispielsweise eine Verfälschung der berechneten Differenz durch einen oder mehrere falsch ausgewählte weitere Konstellationspunkte vermieden.

Besonders vorteilhaft wird das erfindungsgemäße Verfahren gemäß einer weiteren Weiterbildung in einer Empfangseinrichtung einer als Basis- und/oder Mobilstation ausgestalteten Funkstation eines Funk-Kommunikationssystems eingesetzt.

Ausführungsbeispiele der Erfindung werden anhand der beiliegenden Zeichnungen näher erläutert.

Dabei zeigen

FIG 1    ein Blockschaltbild eines Funk-Kommunikationssystems, insbesondere eines Mobilfunksystems,

FIG 2    ein Blockschaltbild einer Empfangseinrichtung einer Funkstation des Funk-Kommunikationssystems,

FIG 3    eine Darstellung der Anordnung der Konstellationspunkte in der komplexen Ebene für eine GMSK-Modulation,

FIG 4    eine Darstellung der Anordnung der Konstellationspunkt für eine 8-PSK-Modulation,

FIG 5    drei Darstellungen der jeweiligen Entscheidungsfläche der Informationselemente,

FIG 6    eine auf der FIG 4 basierenden Darstellung der Ermittlung der euklidischen Distanzen zu den weiteren Konstellationspunkten,

FIG 7    eine Tabelle mit den weiteren Konstellationspunkten für den jeweiligen zugeordneten Konstellationspunkt, und

FIG 8    ein auf den FIG 6 und FIG 7 basierendes Ablaufdiagramm des erfindungsgemäßen Verfahrens.

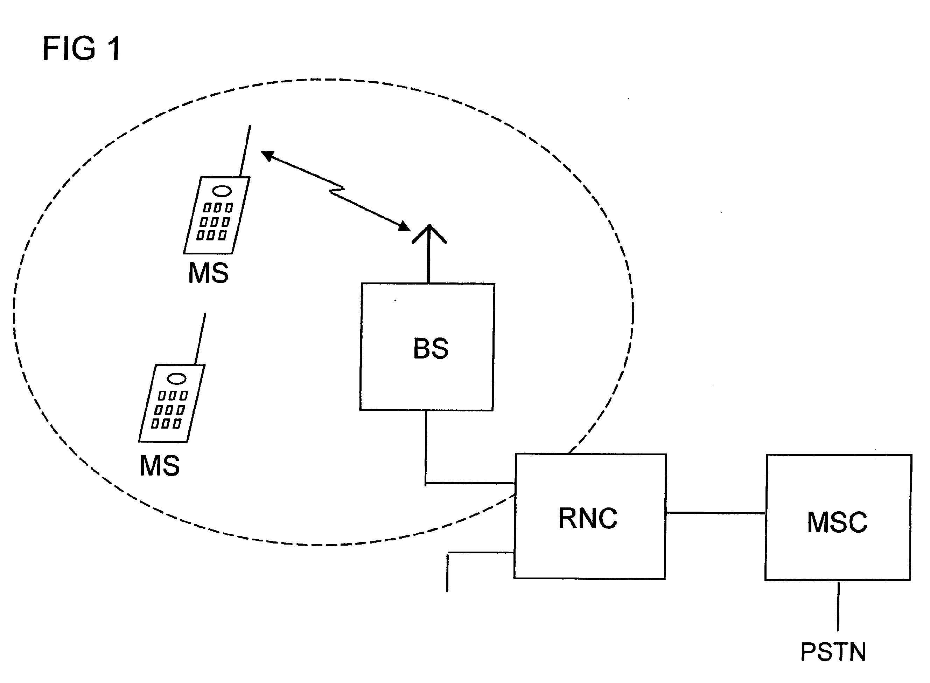

Das in FIG 1 dargestellte und beispielhaft als ein Mobilfunksystem ausgestaltete Funk-Kommunikationssystem entspricht in seiner Struktur dem bekannten GSM-Mobilfunksystem, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einer Einrichtung zur Zuweisung funktechnischer Ressourcen RNC verbunden. Jede dieser Einrichtungen RNC ermöglicht wiederum eine Verbindung zu zumindest einer Basisstation BS. Diese Basisstation BS ist eine Funkstation, die über eine Funkschnittstelle Kommunikationsverbindungen zu weiteren Funkstationen, die als Mobilstationen MS oder stationäre Teilnehmerendgeräte ausgestaltet sein können, aufbauen und auslösen kann. Die Funktionalität dieser Struktur wird von dem erfindungsgemäßen Verfahren genutzt.

In FIG 1 ist beispielhaft eine Funkverbindungen zur Übertragung von beispielsweise Nutzdaten und Signalisierungsinformationen zwischen der Basisstation BS und einer Mobilstation MS dargestellt, die sich in dem Funkversorgungsgebiet der Basisstation BS befindet.

Von einer jeweiligen Datenquelle in der Mobilstation MS resp. in der Basisstation BS wird eine Folge modulierter und kodierter Informationselemente in Form eines Sendesignals abgegeben und in einem hochfrequenten Frequenzband über einen als Funkkanal ausgebildeten Übertragungskanal zu der jeweils empfangenen Basisstation BS resp. Mobilstation MS übertragen.

Das Sendesignal besteht entsprechend dem GSM-Mobilfunksystem aus mindestens einer als Trainingssequenz bezeichneten vorgegebenen Folge von Symbolen und mindestens einem, die Datensymbole enthaltenen, Datenteil mit Datensymbolen. Das Sendesignal unterliegt zeitvarianten Einflüssen des mehrwegebehafteten Funkkanals, den Funkstörungen, die als Impuls-, Burst- oder Dauerstörer auftreten können, sowie dem Einfluß des Rauschens.

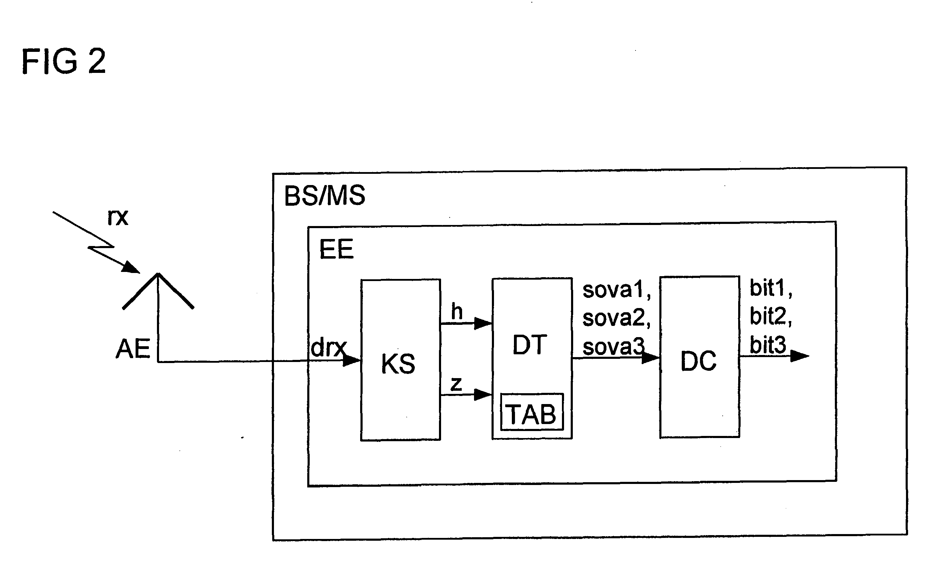

In der FIG 2 sind nur die für den Empfangsfall relevanten Einrichtungen der Basisstation BS bzw. Mobilstation MS dargestellt, es besteht üblicherweise jedoch eine beschriebene zweiseitige Verkehrsverbindung, d.h. die Basisstation BS und die Mobilstation MS weisen in gleicher Weise eine Sendeeinrichtung auf.

Über eine Antenneneinrichtung AE werden Empfangssignale rx empfangen und einer Empfangseinrichtung EE zugeführt. Aus den Empfangssignalen rx werden in der Empfangseinrichtung EE z.B. durch eine Übertragung ins Basisband und eine darauffolgende Analog/Digitalwandlung digitale Signale drx erzeugt, die innerhalb der Empfangseinrichtung EE einem Kanalschätzer KS zugeführt werden. Der Kanalschätzer KS bestimmt aus den digitalen Empfangssignalen drx Kanalkoeffizienten h zur Modellierung des realen Funkkanals und leitet aus den digitalen Empfangssignalen drx Antennendaten z ab. Die berechneten Kanalkoeffizienten h und Antennendaten z werden einem Detektor DT, der eine Entzerrung und Fehlerkorrektur vornimmt, zugeführt. Hierbei ist zu bemerken, daß die Kanalkoeffizienten h und Antennendaten z jeweils komplexe Werte darstellen, wenn die Basisbandumsetzung in In-Phase I und Quadratur-Komponenten Q unterscheidet.

Der Detektor DT besitzt die Aufgabe, aus der Folge von Antennendaten z die über den Funkkanal mit der höchsten Wahrscheinlichkeit übertragenen Datensymbole zu ermitteln. Zu jedem Datensymbol werden wie nachfolgend beschrieben mehrere Qualitätswerte ausgegeben, der ein Maß für die Zuverlässigkeit der Detektion des Datensymbols darstellt. Die als Zuverlässigkeitsinformationen sova1,sova2,sova3 bezeichneten Qualitätswerte werden einer Dekodiereinrichtung DC zugeführt, in der eine Dekodierung bzw. eine Rekonstruktion der Antennendaten z in die Informationselemente bit1,bit2,bit3 der Senderseite erfolgt. Die Informationselemente bit1,bit2,bit3 werden nachfolgend weiteren nicht dargestellten Einrichtungen, wie beispielsweise einem Faltungsdekodierer, für weitere Verarbeitungsschritte zugeführt.

Im folgenden wird die in dem Detektor DT durchgeführte Detektion eines empfangenen Datensymbols sym und die Generierung von Zuverlässigkeitsinformationen sova anhand einer beispielhaften Zuordnung des Datensymbols sym zu Konstellationspunkten cp in einer durch eine In-Phase- I und Quadratur-Komponente Q aufgespannten komplexen Ebene beschrieben.

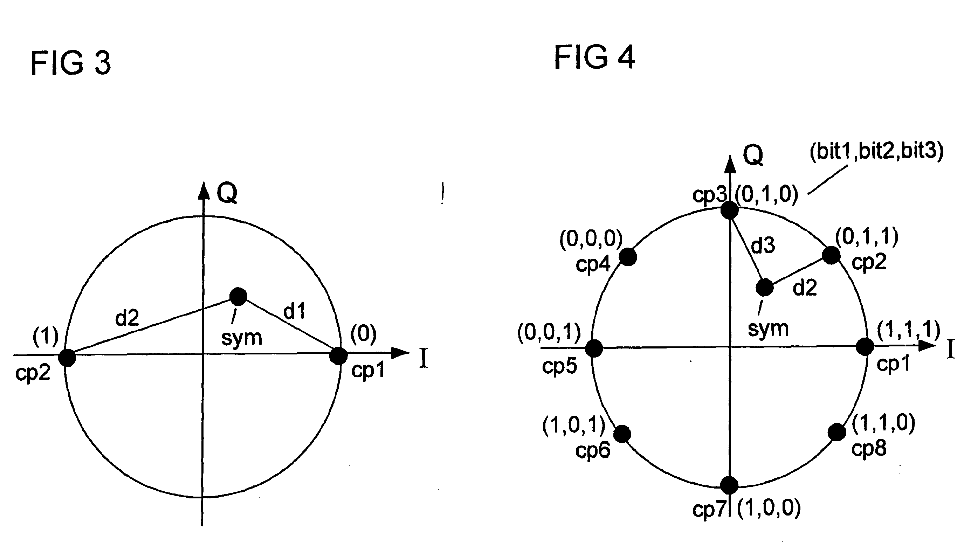

In der FIG 3 ist die Detektion eines empfangenen Datensymbols sym dargestellt, wie es in dem bekannten GSM-Mobilfunksystem mit einer GMSK-Modulation eingesetzt wird. Bei der beschriebenen Basisbandumsetzung wird eine In-Phasen- I und Quadratur-Komponente Q des Datensymbols sym ermittelt und das Datensymbol sym entsprechend dieser Komponenten in dem aufgezeigten Einheitskreis angeordnet. Nachfolgend wird eine jeweilige euklidische Distanz d1, d2 zwischen dem Datensymbol sym und den Konstellationspunkten cp1, cp2 bestimmt. Die Konstellationspunkte cp1,cp2 entsprechen einem jeweiligen binären Zustand 0 bzw. 1 des durch das Datensymbole sym repräsentierten Informationselements bit. Der erste Konstellationspunkt cp1 entspricht dabei dem Wert 1 und der zweite Konstellationspunkt cp2 dem Wert -1 der In-Phase-Komponente I. Nach der Bestimmung der euklidischen Distanzen d1, d2 wird eine Differenz entsprechend d1 - d2 berechnet. Ist diese Differenz beispielsweise kleiner 0, so wird das Datensymbol sym dem ersten Konstellationspunkt cp1 mit der geringeren euklidischen Distanz d1 zugeordnet. Ist die Differenz dahingegen größer 0, so erfolgt eine Zuordnung zu dem zweiten Konstellationspunkt cp2. Dieses Verfahren zur Zuordnung wird auch als "Harte Entscheidung" (Hard Decision) bezeichnet, da auf eine Erzeugung und Weitergabe von Zuverlässigkeitsinformationen verzichtet wird.

In der FIG 4 ist die Anordnung der Konstellationspunkte cp1...cp8 auf dem Einheitskreis dargestellt, wie sie entsprechend dem in der Einleitung genannten ETSI SMG2-Dokument zu der Weiterentwicklung EDGE für das GSM-Mobilfunksystem definiert ist. Durch eine 8-PSK-Modulation werden acht Konstellationspunkte cp1...cp8 gemäß

$$cp_k \in \left\{ 1, \frac{1+j}{\sqrt{2}}, j, \frac{-1+j}{\sqrt{2}}, -1, \frac{-1-j}{\sqrt{2}}, -j, \frac{1-j}{\sqrt{2}} \right\}$$

mit k = 1...8 auf dem Einheitskreis in der komplexen Ebene angeordnet. Diese acht Konstellationspunkte cp1...cp8 ermöglichen, daß jeder Konstellationspunkt eine bestimmte Konstellation von Zuständen von drei Informationselementen bit1,bit2,bit3 repräsentiert - Anzahl der Konstellationspunkte = $2^m$ mit m = Anzahl der Informationselemente.

Wie in dem Beispiel der FIG 4 verdeutlicht ist, werden die euklidischen Distanzen d2, d3 zwischen dem empfangenen Datensymbol sym und den jeweils nächstliegenden Konstellationspunkten cp2, cp3 mit steigender Anzahl Konstellationspunkte geringer, wodurch wie einleitend beschrieben nachteilig eine höhere Wahrscheinlichkeit einer fehlerhaften Zuordnung des Datensymbols sym zu einem Konstellationspunkt auftritt. Entsprechend dem Verfahren der FIG 3 werden die beiden geringsten euklidischen Distanzen d2, d3 zu den nächstliegenden Konstellationspunkten cp1, cp2 ermittelt und miteinander verglichen. Die Zuordnung des Datensymbols sym erfolgt anschließend zu dem Konstellationspunkt mit der geringsten euklidischen Distanz, in dem angegebenen Beispiel zu dem Konstellationspunkt cp2. Zur Unterstützung der Entscheidung kann aus der Differenz zwischen den euklidischen Distanzen d1, d2 ein Zuverlässigkeitswert sova entsprechend sova = d2 - d3 berechnet werden, so daß eine Aussage über die Wahrscheinlichkeit für eine richtige Zuordnung getroffen werden kann. Dieses Verfahren wird analog zu der beschriebenen "Harten Entscheidung" als "Weiche Entscheidung" (Soft Decision) bezeichnet, da der Dekodiereinrichtung mehr Informationen zugeführt werden und sich hierdurch die Anzahl der korregierbaren Detektionsfehler erhöhen läßt.

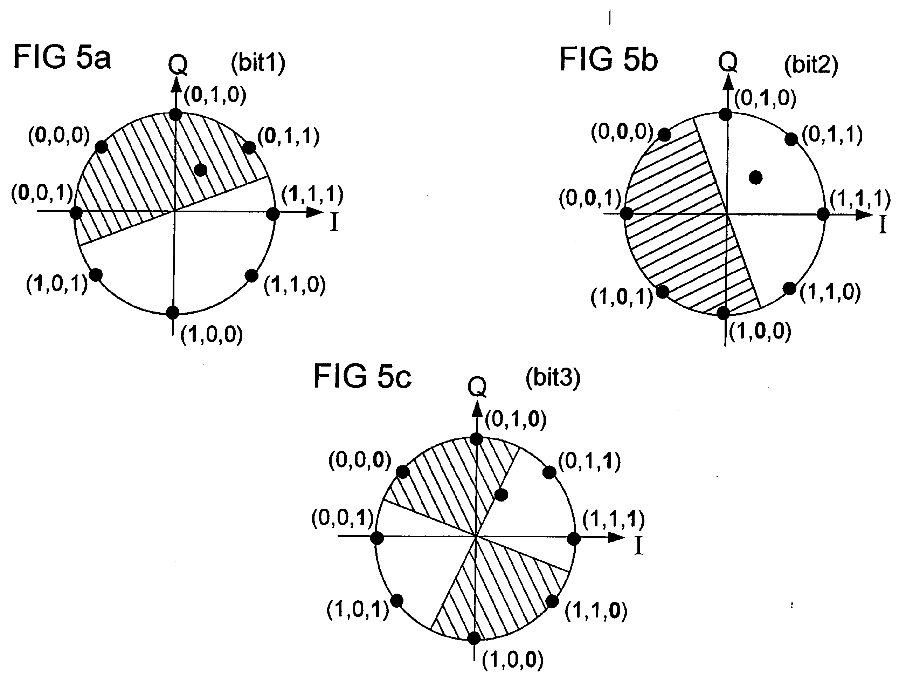

In den FIG 5a bis FIG 5c sind durch die spezielle Konstellation der Zustände der Informationselemente bit1,bit2,bit3 der jeweiligen Konstellationspunkte cp1...cp8 bedingte Entscheidungsflächen für jeweils ein Informationselement bit1,bit2,bit3 dargestellt. In der FIG 5a sind die Entscheidungsflächen für die binären Zustände 0 und 1 des ersten Informationselements bit1 innerhalb des Einheitskreises aufgezeigt. Hierbei wird deutlich, daß sich für den jeweiligen binären Zustand eine große zusammenhängende Fläche ergibt, wobei die schraffierte Entscheidungsfläche dem binären Zustand 0 des ersten Informationselements bit1 entspricht. Das erste Informationselement bit1 des entsprechend den vorhergehenden Figuren lokalisierten Datensymbols sym kann demnach mit einer großer Wahrscheinlichkeit dem binären Zustand 0 zugeordnet werden. In der FIG 5b sind entsprechend die Entscheidungsflächen für das zweite Informationselement bit2 dargestellt. Wiederum ergibt sich für jeden binären Zustand eine große zusammenhängende Fläche. Das zweite Informationselement bit2 des Datensymbols sym kann entsprechend mit einer großen Wahrscheinlichkeit dem Zustand 1 zugeordnet werden. In der FIG 5c wird dahingegen deutlich, daß sich für die Zustände des dritten Informationselements bit3 keine großen zusammenhängenden Flächen ergeben. Die Zuordnung des dritten Informationselements bit3 des Datensymbols sym zu einem der Zustände erfolgt aufgrund der Lage des Konstellationspunktes auf der Grenzfläche zwischen zwei Zuständen nur mit einer geringen Wahrscheinlichkeit.

Die Darstellungen der FIG 5a bis FIG 5c zeigen einen Schwachpunkt des zu der FIG 4 beschriebenen Verfahrens der Zuordnung eines empfangenen Datensymbols sym zu einem Konstellationspunkt auf: während die Zuordnung des Datensymbols sym für die ersten beiden Informationselemente bit1,bit2 mit einer großen Zuverlässigkeit sowohl zu dem zweiten cp2 als auch zu dem dritten Konstellationspunkt cp3 erfolgen kann, erfolgt die richtige Zuordnung bezüglich des dritten Informationselements bit3 aufgrund der Lage des Datensymbols sym mit einer nur geringen Zuverlässigkeit. Durch die Ermittlung einer Zuverlässigkeitsinformation sova für die gesamte Anzahl repräsentierter Informationselemente bit1,bit2,bit3 des Datensymbols sym werden diese Abhängigkeiten von dem beschriebenen bekannten Verfahren jedoch nicht berücksichtigt. Hierdurch tritt eine erhöhte Wahrscheinlichkeit einer fehlerhaften Zuordnung auf.

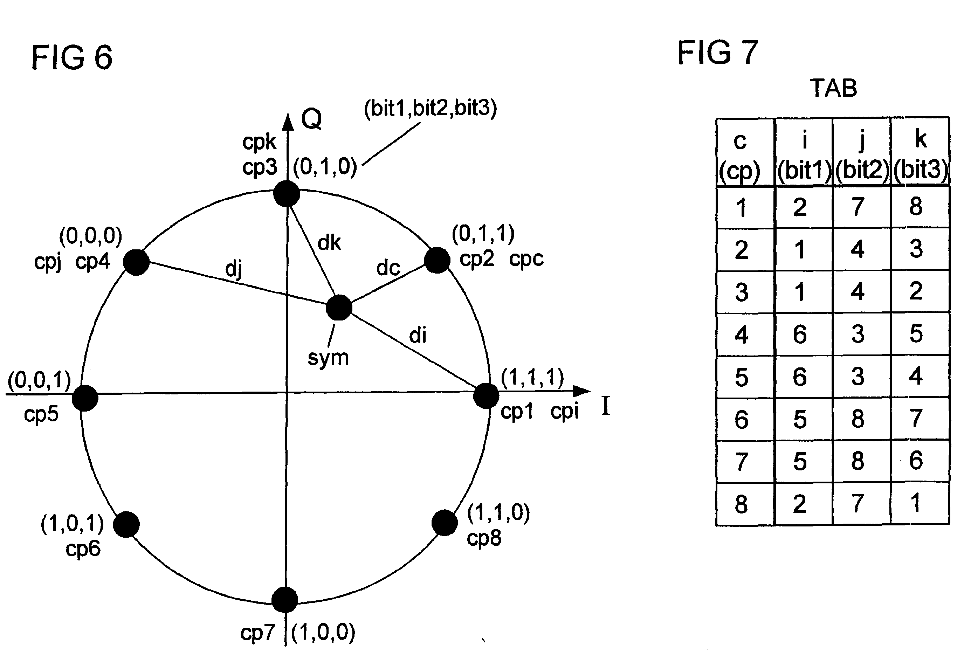

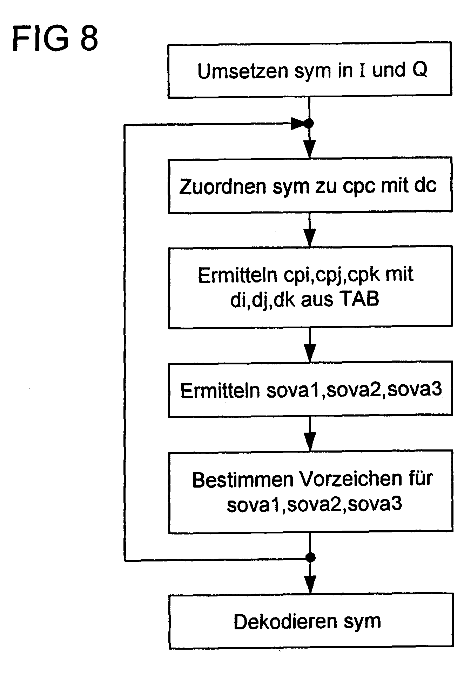

Nachfolgend wird unter Betrachtung der Darstellung der FIG 6 und des Ablaufdiagramms der FIG 8 das erfindungsgemäße Verfahren beschrieben. Das empfangene und in eine In-Phase- I und eine Quadratur-Komponente Q umgesetzte Datensymbol sym situiert sich innerhalb des Einheitskreises in der komplexen Ebene. Die Konstellationspunkte sind wie in der Darstellung der FIG 4 auf dem Einheitskreis angeordnet und entsprechen jeweils der bereits beschriebenen unterschiedlichen Konstellation der Zustände der Informationselemente bit1,bit2,bit3.

Das empfangene Datensymbol sym wird dem Konstellationspunkt cpc mit der geringsten euklidischen Distanz dc zugeordnet. Anschließend werden abhängig von dem zugeordneten Konstellationspunkt cpc weitere Konstellationspunkte cpi,cpj,cpk ermittelt, die eine jeweilige Änderung der Zustände der Informationselemente bit1,bit2,bit3 bewirken. In dem dargestellten Beispiel der FIG 6 ist der weitere Konstellationspunkt, der eine Änderung des beispielsweise binären Zustands 0 im zugeordneten Konstellationspunkt cpc zu dem binären Zustand 1 bewirkt, der Konstellationspunkt cpi, wobei der die Änderung verursachende weitere Konstellationspunkt mit der geringsten euklidischen Distanz di zu dem Datensymbol sym gewählt wird. In gleicher Weise werden die weiteren Konstellationspunkte cpj, cpk für das zweite bit2 bzw. dritte Informationselement bit3 des zugeordneten Konstellationspunktes cpc und die jeweilige euklidische Distanz dj bzw. dk ermittelt.

Aufgrund der sich nicht verändernden Beziehungen zwischen den jeweiligen Zuständen der Informationselemente bit1,bit2,bit3 in den Konstellationspunkten können die weiteren Konstellationspunkte cpi,cpj,cpk beispielsweise in einer Tabelle TAB hinterlegt werden, wie sie beispielhaft in der FIG 7 angegeben ist. Diese Tabelle TAB kann entsprechend der FIG 2 beispielsweise in einer Speichereinrichtung in dem Detektor DT hinterlegt werden, auf die der Detektor DT zur Ermittlung der jeweils weiteren Konstellationspunkte cpi,cpj,cpk zugreift. Entspricht der zugeordnete Konstellationspunkt cpc beispielsweise dem zweiten Konstellationspunkt cp2, so können für die Informationselemente bit1,bit2,bit3 die jeweiligen weiteren Konstellationspunkte (cp1 für bit1, cp4 für bit2, cp3 für bit3) aus der Tabelle TAB ermittelt werden.

Nach dieser Zuordnung wird für jedes Informationselement bit1,bit2,bit3 des zugeordneten Konstellationspunktes cpc eine Zuverlässigkeitsinformation sova1,sova2,sova3 berechnet. Hierzu wird beispielsweise ein Absolutwert einer jeweiligen Differenz zwischen der geringsten euklidischen Distanz dc und der euklidischen Distanz di,dj,dk zu den weiteren Konstellationspunkten cpi,cpj,cpk berechnet. Entsprechend ergeben sich die Zuverlässigkeitsinformationen zu :

$$\mathtt{sova1\ =\ -abs(dc-di)}\qquad(1)$$

$$\mathtt{sova2\ =\ abs(dc-dj)}\qquad(2)$$

$$\mathtt{sova3\ =\ abs(dc-dk)}\qquad(3)$$

Das Vorzeichen der jeweiligen Zuverlässigkeitsinformation sova1,sova2,sova3 ergibt sich aus dem binären Zustand des Informationselements bit1,bit2,bit3 des zugeordneten Konstellationspunktes cpc, wobei der binäre Zustand 0 beispielsweise einem negativen Vorzeichen und der binäre Zustand 1 einem positiven Vorzeichen entspricht. Das Vorzeichen bewirkt eine Relativierung für die beschriebene anschließende Berechnung einer Metrik für eine Folge mehrerer empfangener Datensymbole sym beispielsweise eines Übertragungsbursts.

Allgemein kann das Vorzeichen mittels einer Signum-Funktion bestimmt werden. Hierdurch werden die Gleichungen (1) bis (3) in folgender Weise verändert:

$$\mathtt{sova1\ =\ (2*sgn(Zustand\ bit1)-1)*(di-dc)}\qquad(4)$$

$$\mathtt{sova2\ =\ (2*sgn(Zustand\ bit2)-1)*(dj-dc)}\qquad(5)$$

$$\mathtt{sova3\ =\ (2*sgn(Zustand\ bit3)-1)*(dk-dc)}\qquad(6)$$

mit Zustand $\in$ {0, 1} für sgn(0) = 0 und sgn(1) = 1.

Die für jedes Informationselement bit1,bit2,bit3 des Datensymbols sym berechneten Zuverlässigkeitswerte sova1,sova2,sova3 werden, wie zu der FIG 2 beschrieben, nachfolgend einer Dekodiereinrichtung DC zugeführt, die eine Auswertung dieser Zuverlässigkeitswerte und die Dekodierung des Datensymbols sym vornimmt.

Das dargestellte Verfahren ist aufgrund der allgemeinen Gültigkeit sowohl auf alle $2^m$-PSK-Modulationen mit m = 2... als auch auf andere bekannte Modulationsarten mit einer jeweiligen Anordnung von Konstellationspunkten in der komplexen Ebene anwendbar.

**Patentansprüche**

1. Verfahren zum Detektieren eines über eine Funkschnittstelle eines Funk-Kommunikationssystems übertragenen Datensymbols (sym), das eine Anzahl (m) von durch eine multiple ($2^m$) PSK-Modulation kodierte Informationselementen (bit1,bit2,bit3) aufweist,

   - bei dem das in eine In-Phase-Komponente (I) und eine Quadratur-Komponente (Q) umgesetzte Datensymbol (sym) einem Konstellationspunkt (cpc) mit einer geringsten euklidischen Distanz (dc) zugeordnet wird, wobei der Konstellationspunkt (cpc,cpi,cpj,cpk), der durch eine bestimmte In-Phase-Komponente (I) und Quadratur-Komponente (Q) bestimmt ist, eine Konstellation von Zuständen der Informationselemente (bit1,bit2,bit3) aufweist,

- bei dem, abhängig von dem zugeordneten Konstellationspunkt (cpc), eine der Anzahl (m) der Informationselemente (bit1,bit2,bit3) entsprechende Anzahl euklidischer Distanzen (di,dj,dk) zu weiteren Konstellationspunkten (cpi,cpj,cpk) ermittelt wird, wobei jeder weitere Konstellationspunkt einen anderen Zustand für das jeweilige Informationselement aufweist, und
- bei dem für jedes Informationselement (bit1,bit2,bit3) eine Zuverlässigkeitsinformation (sova1,sova2,sova3) mittels einer Berechnung einer Differenz zwischen der euklidischen Distanz (di,dj,dk) zu dem jeweils weiteren Konstellationspunkt (cpi,cpj,cpk) und der geringsten euklidischen Distanz (dc) ermittelt wird,

**gekennzeichnet dadurch, dass** beim Ermitteln der euklidischen Distanzen als weitere Konstellationspunkte (cpi, cpj, cpk) diejenigen mit der geringsten euklidischen Distanz zum Datensymbol gewählt werden.

2. Verfahren nach Anspruch 1, bei dem die ermittelten Zuverlässigkeitsinformationen (sova1,sova2,sova3) für eine Dekodierung des Datensymbols (sym) berücksichtigt werden.

3. Verfahren nach einem vorhergehenden Anspruch, bei dem die Informationselemente (bit1,bit2,bit3) durch eine 8-PSK-Modulation moduliert werden, und die Konstellationspunkte (cp1...cp8) auf einem Einheitskreis in der komplexen Ebene entsprechend

$$cp_k \in \left\{ 1, \frac{1+j}{\sqrt{2}}, j, \frac{-1+j}{\sqrt{2}}, -1, \frac{-1-j}{\sqrt{2}}, -j, \frac{1-j}{\sqrt{2}} \right\}$$

mit k = 1...8
angeordnet werden.

4. Verfahren nach einem vorhergehenden Anspruch, bei dem die jeweils ermittelte Zuverlässigkeitsinformation (sova1,sova2,sova3) mit einem von dem Zustand des jeweiligen Informationselements (bit1,bit2,bit3) des zugeordneten Konstellationspunktes (cpc) abhängigen Vorzeichen versehen wird.

5. Verfahren nach dem vorhergehenden Anspruch, bei dem das Vorzeichen entsprechend einer Signum-Funktion des Zustands des jeweiligen Informationselements (bit1,bit2,bit3) gemäß Vorzeichen = 2*sgn(bit1, bit2, bit3)-1
mit
sgn(bit1,bit2,bit3) = 0
für Zustand Informationselement (bit1,bit2,bit3) = 0, und
sgn(bit1,bit2,bit3) = 1
für Zustand Informationselement (bit1,bit2,bit3) = 1 berechnet wird.

6. Verfahren nach einem vorhergehenden Anspruch, bei dem die weiteren Konstellationspunkte (cpi,cpj,cpk) mittels einer Tabelle (TAB) bestimmt werden, wobei in der Tabelle (TAB) zu jedem zugeordneten Konstellationspunkt (cpc) die jeweiligen weiteren Konstellationspunkte (cpi,cpj,cpk) spezifiziert sind.

7. Empfangseinrichtung (EE) einer Basisstation (BS) und/oder einer Mobilstation (MS) eines Funk-Kommunikationssystems zum Empfangen eines über eine Funkschnittstelle des Funk-Kommunikationssystems übertragenen Datensymbols (sym), das eine Anzahl (m) von durch eine multiple ($2^m$) PSK-Modulation kodierte Informationselementen (bit1,bit2,bit3) aufweist,

- mit zumindest einem Kanalschätzer (KS), zum Ableiten des in eine In-Phase-Komponente (I) und eine Quadratur-Komponente (Q) umgesetzten Datensymbols (sym) aus einem digitalen Empfangssignal (drx), und
- mit zumindest einer Detektoreinrichtung (DT),

- zum Zuordnen des Datensymbols (sym) zu einem Konstellationspunkt (cpc) mit einer geringsten euklidischen Distanz (dc), der durch eine bestimmte In-Phase-Komponente (I) und Quadratur-Komponente (Q) bestimmt ist und eine Konstellation von Zuständen der Informationselemente (bit1,bit2,bit3) aufweist,
- zum Ermitteln, abhängig von dem zugeordneten Konstellationspunkt (cpc), einer der Anzahl (m) der Informationselemente (bit1,bit2,bit3) entsprechenden Anzahl euklidischer Distanzen (di,dj,dk) zu weiteren Konstellationspunkten (cpi,cpj,cpk), wobei jeder weitere Konstellationspunkt einen anderen Zustand für das jeweilige Informationselement aufweist und wobei als weitere Konstellationspunkte (cpi,cpj,cpk) diejenigen mit der geringsten euklidschen Distanz zum Datensymbol gewählt werden, und
- zum Ermitteln einer Zuverlässigkeitsinformation (sova1,sova2,sova3) für jedes Informationselement (bit1,bit2,bit3) mittels einer Berechnung einer Differenz zwischen der euklidischen Distanz (di,dj,dk) zu dem jeweils weiteren Konstellationspunkt (cpi,cpj,cpk) und der geringsten euklidischen Distanz (dc).

**8.** Empfangseinrichtung (EE) nach Anspruch 7, mit zumindest einer in der Detektoreinrichtung (DT) verwirklichten Tabelle (TAB) zum Bestimmen der weiteren Konstellationspunkte (cpi,cpj,cpk), wobei in der Tabelle (TAB) zu jedem zugeordneten Konstellationspunkt (cpc) die jeweiligen weiteren Konstellationspunkte (cpi,cpj,cpk) spezifiziert sind.

**9.** Empfangseinrichtung (EE) nach Anspruch 7 oder 8, mit zumindest einer Dekodiereinrichtung (DC) zum Auswerten der Zuverlässigkeitsinformationen (sova1,sova2,sova3) und zum Rekonstuieren der Informationselemente (bit1,bit2,bit3).

**10.** Funkstation (BS, MS) eines Funk-Kommunikationssystems, mit einer Empfangseinrichtung (EE) nach einem der Ansprüche 7 bis 9.

**11.** Funkstation (BS, MS) nach Anspruch 10, die als eine Basisstation, eine Mobilstation und/oder ein stationäres Teilnehmerendgerät des Funk-Kommunikationssystems verwirklicht ist.

## Claims

**1.** Method for detecting a data symbol (sym) transmitted via a radio interface of a radiocommunication system, which has a number (m) of information elements (bit1,bit2,bit3) coded by a multiple ($2^m$) PSK modulation,

- in which the data symbol (sym), converted into an in-phase component (I) and a quadrature component (Q), is allocated to a constellation point (cpc) with a smallest Euclidian distance (dc), wherein the constellation point (cpc,cpi,cpj,cpk), which is determined by a particular in-phase component (I) and quadrature component (Q), has a constellation of states of the information elements (bit1,bit2,bit3),
- in which, in dependence on the associated constellation point (cpc), a number of Euclidian distances (di,dj, dk), corresponding to the number (m) of the information elements (bit1,bit2,bit3), from further constellation points (cpi,cpj,cpk) is determined, wherein each further constellation point has a different state for the respective information element, and
- in which a reliability information (sova1, sova2, sova3) is determined for each information element (bit1,bit2,bit3) by means of a calculation of a difference between the Euclidian distance (di,dj,dk) from the in each case further constellation point (cpi,cpj,cpk) and the smallest Euclidian distance (dc), **characterized in that** during the determining of the Euclidian distances, the ones having the smallest Euclidian distance from the data symbol are selected as further constellation points (cpi,cpj,cpk).

**2.** Method according to Claim 1, in which the determined reliability information items (sova1, sova2, sova3) are taken into consideration for decoding the data symbol (sym).

**3.** Method according to a preceding claim, in which the information elements (bit1,bit2,bit3) are modulated by an 8-PSK modulation and the constellation points (cp1...cp8) are arranged on a circle of unity in the complex plane according to

$$cp_k \in \left\{ 1, \frac{1+j}{\sqrt{2}}, j, \frac{-1+j}{\sqrt{2}}, -1, \frac{-1-j}{\sqrt{2}}, -j, \frac{1-j}{\sqrt{2}} \right\}$$

with k = 1...8.

**4.** Method according to a preceding claim, in which the reliability information determined in each case (sova1,sova2,sova3) is provided with a sign dependent on the state of the respective information element (bit1,bit2,bit3) of the associated constellation point (cpc).

**5.** Method according to the preceding claim, in which the sign is calculated in accordance with a signum function of the state of the respective information element (bit1,bit2,bit3) according to

sign = 2*sgn(bit1,bit2,bit3)-1

with

sgn(bit,bit2,bit3) = 0

for state information element (bit1,bit2,bit3) = 0, and

sgn (bit1, bit2, bit3) = 1

for state information element (bit1,bit2,bit3) = 1.

**6.** Method according to a preceding claim, in which the further constellation points (cpi,cpj,cpk) are determined by means of a table (TAB), wherein the respective further constellation points (cpi,cpj,cpk) are specified for each associated constellation point (cpc) in the table (TAB).

**7.** Receiving device (EE) of a base station (BS) and/or a mobile station (MS) of a radiocommunication system for receiving a data symbol (sym) transmitted via a radio interface of the radiocommunication system, which has a number (m) of information elements (bit1,bit2,bit3) coded by a multiple ($2^m$) PSK-modulation,

- having at least one channel estimator (KS) for deriving the data symbol (sym), converted into an in-phase component (I) and a quadrature component (Q), from a received digital symbol (drx), and
- with at least one detector device (DT),

- for allocating the data symbol (sym) to a constellation point (cpc) having a smallest Euclidian distance (dc), which is determined by a particular in-phase component (I) and quadrature component (Q) and has a constellation of states of the information elements (bit1,bit2,bit3),
- for determining, in dependence on the associated constellation point (cpc), a number, corresponding to the number (m) of the information elements (bit1,bit2,bit3), of Euclidian distances (di,dj,dk) from further constellation points (cpi,cpj,cpk), wherein each further constellation point has a different state for the respective information element and wherein, as further constellation points (cpi,cpj,cpk), those having the smallest Euclidian distance from the data symbol are selected, and
- for determining a reliability information (sova1,sova2,sova3) for each information element (bit1,bit2,bit3) by means of a calculation of a difference between the Euclidian distance (di,dj,dk) from the in each case further constellation point (cpi,cpj,cpk) and the smallest Euclidian distance (dc).

**8.** Receiving device (EE) according to Claim 7, with at least one table (TAB), realized in the detector device (DT), for determining the further constellation points (cpi,cpj,cpk), wherein the respective further constellation points (cpi,cpj, cpk) for each associated constellation point (cpc) are specified in the table (TAB).

**9.** Receiving device (EE) according to Claim 7 or 8, with at least one decoding device (DC) for evaluating the reliability information items (sova1,sova2,sova3) and for reconstituting the information elements (bit1,bit2,bit3).

**10.** Radio station (BS, MS) of a radiocommunication system, with a receiving device (EE) according to one of Claims 7 to 9.

**11.** Radio station (BS, MS) according to Claim 10, which is realized as a base station, a mobile station and/or a stationary subscriber terminal of the radiocommunication system.

**Revendications**

**1.** Procédé pour détecter un symbole de données (sym) transmis par l'intermédiaire d'une interface radio d'un système de radiocommunication, qui présente un nombre (m) d'éléments d'information (bit1, bit2, bit3) codés au moyen d'une modulation PSK multiple ($2^m$),

- dans lequel le symbole de données (sym) converti en une composante en phase (I) et une composante de quadrature (Q) est affecté à un point de constellation (cpc) ayant une distance euclidienne (dc) la plus petite, le point de constellation (cpc, cpi, cpj, cpk), qui est déterminé au moyen d'une composante en phase (I) et d'une composante de quadrature (Q)données, présentant une constellation d'états des éléments d'information (bit1, bit2, bit3),
- dans lequel, en fonction du point de constellation affecté (cpc), un nombre, correspondant au nombre (m) d'éléments d'information (bit1, bit2, bit3), de distances euclidiennes (di, dj, dk) est déterminé par rapport à des points de constellation supplémentaires (cpi, cpj, cpk), chaque point de constellation supplémentaire présentant un autre état pour l'élément d'information respectif,
- dans lequel une information de fiabilité (sova1, sova2, sova3) est déterminée pour chaque élément d'information (bit1, bit2, bit3) au moyen d'un calcul d'une différence entre la distance euclidienne (di, dj, dk) par rapport au point de constellation supplémentaire respectif (cpi, cpj, cpk) et la distance euclidienne (dc) la plus petite,

**caractérisé en ce que** lors de la détermination des distances euclidiennes, les points de constellation ayant la distance euclidienne la plus petite par rapport au symbole de données sont sélectionnés comme points de constellation supplémentaires (cpi, cpj, cpk).

2. Procédé selon la revendication 1, dans lequel les informations de fiabilité déterminées (sova1, sova2, sova3) sont prises en considération pour un décodage du symbole de données (sym).

3. Procédé selon une revendication précédente quelconque, dans lequel les éléments d'information (bit1, bit2, bit3) sont modulés à l'aide d'une modulation 8 PSK et dans lequel les points de constellation (cp1 ... cp8) sont disposés sur un cercle unitaire dans le plan complexe suivant

$$cp_k \in \left\{ 1, \frac{1+j}{\sqrt{2}}, j, \frac{-1+j}{\sqrt{2}}, -1, \frac{-1-j}{\sqrt{2}}, -j, \frac{1-j}{\sqrt{2}} \right\}$$

mit k = 1...8

4. Procédé selon une revendication précédente quelconque, dans lequel l'information de fiabilité respectivement déterminée (sova1, sova2, sova3) est dotée d'un signe dépendant de l'état de l'élément d'information respectif (bit1, bit2, bit3) du point de constellation affecté (cpc).

5. Procédé selon une revendication précédente quelconque, dans lequel le signe est calculé selon une fonction signe de l'état de l'élément d'information respectif (bit1, bit2, bit3) selon le signe = 2*sgn(bit1, bit2, bit3)-1
où
sgn (bit1, bit2, bit3) = 0
pour état de l' élément d'information (bit1, bit2, bit3) = 0
et
sgn (bit1, bit2, bit3) = 1
pour état de l' élément d'information (bit1, bit2, bit3) = 1.

6. Procédé selon une revendication précédente quelconque, dans lequel les points de constellation supplémentaires (cpi, cpj, cpk) sont déterminés au moyen d'un tableau (TAB), les points de constellation supplémentaires respectifs (cpi, cpj, cpk) étant spécifiés dans le tableau par rapport à chaque point de constellation affecté (cpc).

7. Récepteur (EE) d'une station de base (BS) et/ou d'une station mobile (MS) d'un système de radiocommunication, destiné à la réception d'un symbole de données (sym) transmis par l'intermédiaire d'une interface radio du système de radiocommunication, qui présente un nombre (m) d'éléments d'information (bit1, bit2, bit3) codés au moyen d'une modulation PSK multiple ($2^m$),

- comprenant au moins un estimateur de canal (KS) destiné à déduire le symbole de données (sym) converti en une composante en phase (I) et en une composante de quadrature (Q) à partir d'un signal de réception numérique (drx), et
- comprenant au moins un dispositif détecteur (DT),

- destiné à affecter le symbole de données (sym) à un point de constellation (cpc) ayant une distance euclidienne (dc) la plus petite, qui est déterminé au moyen d'une composante en phase (I) et d'une composante en quadrature (Q) déterminées, et qui présente une constellation d'états des éléments d'information (bit1, bit2, bit3),
- destiné à déterminer, en fonction du point de constellation affecté (cpc), un nombre, correspondant au nombre (m) d'éléments d'information (bit1, bit2, bit3), de distances euclidiennes (di, dj, dk) par rapport à des points de constellation supplémentaires (cpi, cpj, cpk), chaque point de constellation supplémentaire présentant un autre état pour l'élément d'information respectif et les points de constellation ayant la distance euclidienne la plus petite par rapport au symbole de données étant sélectionnés comme points de constellation supplémentaires (cpi, cpj, cpk), et
- destiné à déterminer une information de fiabilité (sova1, sova2, sova3) pour chaque élément d'information (bit1, bit2, bit3) au moyen d'un calcul d'une différence entre la distance euclidienne (di, dj, dk) par rapport au point de constellation supplémentaire respectif (cpi, cpj, cpk) et la distance euclidienne la plus petite (dc).

**8.** Récepteur (EE) selon la revendication 7, comprenant au moins un tableau (TAB) réalisé dans le dispositif détecteur (DT) et destiné à déterminer les points de constellation supplémentaires (cpi, cpj, cpk), les points de constellation supplémentaires respectifs (cpi, cpj, cpk) étant spécifiés dans le tableau (TAB) par rapport à chaque point de constellation affecté (cpc).

**9.** Récepteur (EE) selon la revendication 7 ou 8, comprenant au moins un dispositif décodeur (DC) destiné à évaluer les informations de fiabilité (sova1, sova2, sova3) et à reconstruire les éléments d'information (bit1, bit2, bit3).

**10.** Station radio (BS, MS) d'un système de radiocommunication, comprenant un récepteur (EE) selon l'une quelconque des revendications 7 à 9.

**11.** Station radio (BS, MS) selon la revendication 10, qui est réalisée en tant que station de base, station mobile et/ou terminal stationnaire d'abonné du système de radiocommunication.

FIG 1

EP 1 039 705 B1

# FIG 2

EP 1 039 705 B1

FIG 4

FIG 3

FIG 5b

FIG 5a

FIG 5c

## FIG 6

## FIG 7

TAB

| c (cp) | i (bit1) | j (bit2) | k (bit3) |
|---|---|---|---|
| 1 | 2 | 7 | 8 |
| 2 | 1 | 4 | 3 |
| 3 | 1 | 4 | 2 |
| 4 | 6 | 3 | 5 |
| 5 | 6 | 3 | 4 |
| 6 | 5 | 8 | 7 |
| 7 | 5 | 8 | 6 |
| 8 | 2 | 7 | 1 |

EP 1 039 705 B1

## FIG 8

```
┌─────────────────────────────┐
│   Umsetzen sym in I und Q   │
└─────────────────────────────┘
              │
              ▼
┌─────────────────────────────┐
│   Zuordnen sym zu cpc mit dc │
└─────────────────────────────┘
              │
              ▼
┌─────────────────────────────┐
│   Ermitteln cpi,cpj,cpk mit  │
│       di,dj,dk aus TAB       │
└─────────────────────────────┘
              │
              ▼
┌─────────────────────────────┐
│   Ermitteln sova1,sova2,sova3│
└─────────────────────────────┘
              │
              ▼
┌─────────────────────────────┐
│   Bestimmen Vorzeichen für   │
│      sova1,sova2,sova3       │
└─────────────────────────────┘
              │
              ▼
┌─────────────────────────────┐
│       Dekodieren sym        │
└─────────────────────────────┘
```

EP 1 039 705 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **J. BIALA.** Mobilfunk und intelligente Netze. Vieweg Verlag, 1995
- **VON S. LIN ; D.J.COSTELLO.** Error Control Coding. Prentice Hall, 1983
- Low complexity bit by bit soft output demodulator. **VON FAGERVIK et al.** Electronics Letters, IEE Stevenage. 23. Mai 1996, vol. 32, 985-987